# FASCICULE DE BREVET EUROPEEN

(11) **EP 0 536 117 B1**
(45) Date de publication et mention de la délivrance du brevet: **09.11.1994**
(21) Numéro de dépôt: 90910775.7
(22) Date de dépôt: 28.06.1990
(51) Int. Cl.: G09B 29/00

(54) **OUTIL D'ORGANISATION ET/OU DE PLANIFICATION**
PLANNUNGS- UND/ODER ORGANISIERUNGSWERKZEUG
ORGANIZING AND/OR PLANNING AID

(43) Date de publication de la demande: 14.04.1993
(73) Titulaire: Bretonvilloise d'Invention et d'Innovation, F-80380 Villers-Bretonneux (FR)
(72) Inventeur: MORTEMARD DE BOISSE, Jérôme, F-92100 Boulogne (FR)
(74) Mandataire: Sauvage, Renée
(86) Numéro de dépôt international: FR9000480
(87) Numéro de publication internationale: WO9200581

(56) Documents cités:
- DE-U- 8 504 892
- DE-U- 8 514 721
- FR-A- 2 524 676
- FR-A- 2 602 082
- US-A- 4 803 795
- AIRCRAFT PRODUCTION, volume 22, no. 8, août 1960, (Londres, GB) "Programming chart", page 320

## Description

La présente invention concerne un outil d'organisation et/ou de planification comprenant au moins une série de fiches mobiles et au moins un support dont au moins une face est adaptée à recevoir temporairement lesdites fiches dans un ordre de classement déterminé et modifiable.

Plus précisement, l'invention concerne un outil d'organisation et/ou planification, comprenant, d'une part, au moins une série de fiches mobiles ayant une face inscriptible offrant une zone d'identification/classement et une zone d'annotation et, d'autre part, au moins un support dont au moins une face est adaptée à recevoir temporairement lesdites fiches dans un ordre de classement déterminé et modifiable, ladite face du support adaptée à recevoir temporairement lesdites fiches présentant des zones de réception des fiches, avec un chevauchement partiel entre elles laissant à découvert leur zone d'identification/classement.

Dans les outils de ce type, appelés en général plannings, les fiches mobiles sont généralement constituées d'une pièce de carton en forme de T dont la barre verticale est adaptée à pénétrer dans une fente prévue dans le support, tandis que la barre horizontale vient en butée sur les bords de ladite fente, les éléments d'information inscrits sur ladite barre horizontale demeurant ainsi visibles.

Pour pouvoir supporter les manipulations, ces fiches en T doivent être suffisamment rigides et c'est pourquoi elles sont réalisées en carton. Il s'ensuit qu'une réserve de fiches possède une épaisseur non négligeable (environ 2 cm pour 100 fiches auxquels il convient d'ajouter l'épaisseur de l'étui les contenant). Ajoutons à cela que lorsqu'il s'agit de réaliser un planning portable, il est nécessaire que chaque support soit doublé (d'où un accroissement de l'épaisseur) car la barre verticale des fiches en T enfilées par les fentes ménagées dans le support vient se glisser entre celui-ci et ladite doublure. Par suite de ces problèmes d'épaisseur, les plannings portables existants ne comportent pas de réserve de fiches, si ce n'est quelques fiches vierges enfilées dans des fentes inutilisées.

La présente invention a pour but d'apporter un nouvel outil d'organisation et/ou de planification qui élimine ces inconvénients.

A cette fin, selon l'invention, les fiches sont constituées de papillons de papier, dits papillons "transférables", dont la face opposée à la face inscriptible est partiellement enduite d'un adhésif sensible à la pression permettant des collages, décollages et re-collages répétés, sur lesdites zones de réception et en ce que ces zones de réception sont constituées de tracés délimitant des zones de réception d'une géométrie appropriée à créer ledit chevauchement.

Comme papillons transférables susceptibles d'être utilisés selon l'invention, on peut avoir recours à ceux connus sous la marque Post-it. Du fait qu'ils sont en papier, ces papillons constituent des fiches de bien plus faible épaisseur que les fiches en T connues (un bloc de 100 papillons a une épaisseur d'approximativement 1 cm) et du fait qu'ils sont collés l'un sur l'autre, ils n'ont pas besoin d'être inclus dans un étui. Par ailleurs, comme ils sont immobilisés en place par collage, ils ne demandent pas de support fendu, ni de doublure du support par une face arrière. Il s'ensuit donc que l'épaisseur du support est également réduite. Grâce à cet ensemble de caractéristiques, il est possible d'inclure dans l'outil d'organisation une ou plusieurs réserves de fiches, c'est-à-dire de blocs de papillons.

On connaît, certes, d'après DE-U- 8 514 721, un outil comportant un support et des papillons transferables susceptibles d'être reçus sur des tracés prévus sur le support mais ces tracés ne sont pas conçus pour entraîner un chevauchement entre les papillons.

Avantageusement, l'outil selon l'invention est garni d'une collection de blocs différents de papillons transférables, les blocs diffèrant par la couleur et/ou le format et/ou le texte de mentions ou la géométrie de tracés constants portés sur lesdits papillons.

De préférence, la face inscriptible desdits papillons transférables est subidivisée en une zone d'identification/classement et une zone d'annotation.

Cette zone d'identification/classement jouera le rôle de la barre horizontale des fiches en T, tandis que la zone d'annotation jouera le rôle de la barre verticale.

A cette fin, la face support adaptée à recevoir temporairement lesdits papillons transférables présente des zones de réception des papillons avec un chevauchement partiel entre eux laissant à découvert leur zone d'identification/classement.

L'outil selon l'invention comporte avantageusement plusieurs supports juxtaposés bord à bord et articulés entre eux le long des bords de juxtaposition en formant, selon le nombre de supports, un diptyque, un triptyque, etc...

Dans une forme d'exécution préférée, l'outil comporte en outre au moins un autre support réuni de façon pivotante à deux supports appartenant à un diptyque, triptyque, etc... au niveau de l'une des articulations de ce dernier.

D'autres caractéristiques et avantages de l'invention ressortiront de la description ci-après faite en référence aux dessins annexés dans lesquels :
- la figure 1 représente une vue de dessus de l'outil d'organisation et/ou de planification selon l'invention à l'état partiellement ouvert,

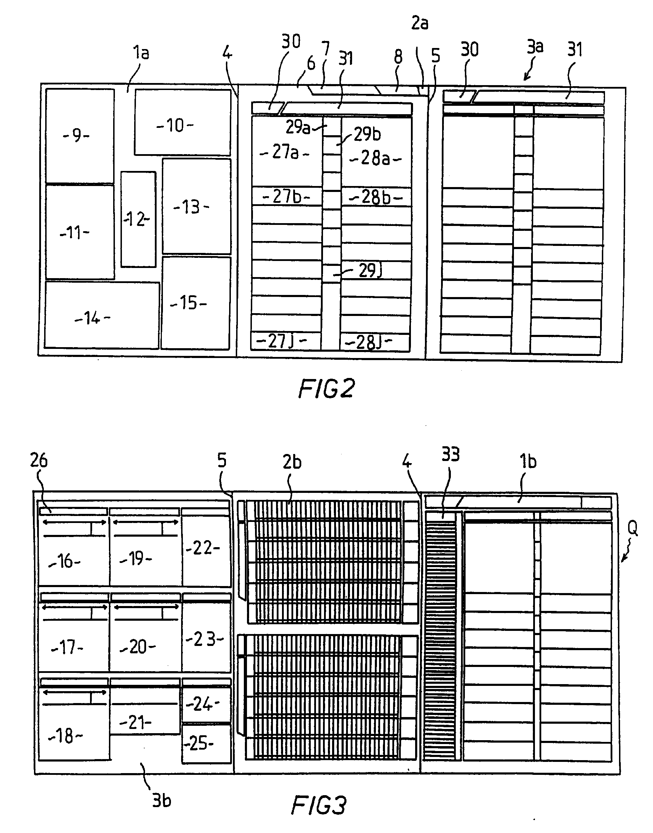

- la figure 2 est une vue prise selon la flèche V1 de la figure 1 de l'outil selon l'invention complètement mis à plat,
- la figure 3 est une vue similaire à la figure 2 mais selon la flèche V2, et
- les figures 4 et 5 sont des exemples de formes d'exécution de papillons selon l'invention.

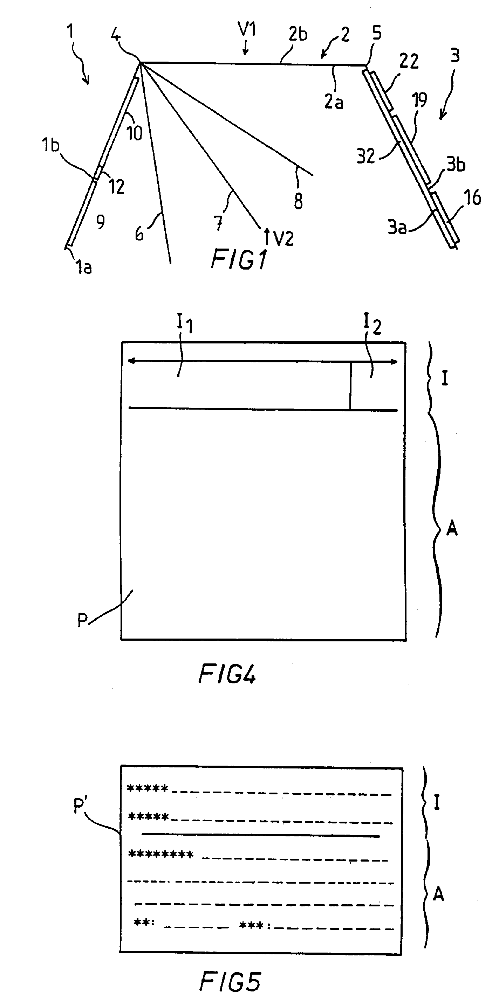

Si l'on se réfère à la figure 1, on voit que l'outil d'organisation et/ou de planification est constitué de trois volets 1, 2 et 3 montés en triptyque, c'est-à-dire que le volet 1 et le volet 2 sont articulés selon leur ligne de jonction 4, tandis que le volet 2 et le volet 3 sont articulés selon leur ligne de jonction 5. Le long de la ligne de jonction et d'articulation 4 sont montés trois volets supplémentaires 6, 7 et 8. La face interne la du volet 1 est garnie d'une collection de blocs 9 à 15 de papillons transférables imprimés de mentions telles que "JE VOUS ENVOIE CE DOCUMENT POUR", "EN VOTRE ABSENCE" etc...

De la même façon, la face externe 3b du volet 3 est garnie d'une collection 16 à 25 de blocs de papillons qui diffèrent les uns des autres par leur couleur et/ou leur format et/ou les mentions ou tracés qui y sont imprimés. Ainsi, par exemple, les papillons P des blocs 16 à 20 pourront être de couleur différente et présenter un tracé tel que celui représenté à la figure 4. Ce tracé définit une zone d'identification I et une zone d'annotation A. La zone d'identification I est elle-même subdivisée en une zone d'identification proprement dite I1 et par exemple d'une zone de date ou de code I2.

Les papillons P′ du bloc 21 pourront, de leur côté, être imprimés des rubriques courantes d'un carnet d'adresses, par exemple des rubriques NOM et TELEPHONE sur une zone équivalant à la zone I de la figure 4 et des rubriques ADRESSE, TELEX et TELECOPIE sur une zone équivalant à la zone d'annotation A de la figure 4.

Chaque bloc de la collection 16 à 24 est surmonté d'une zone encadrée telle que 26 indiquant la destination du bloc de papillons se trouvant au-dessous.

La face 3a du volet 3 est garnie d'un bloc 32 de feuilles arrachables Q sur lesquelles on reviendra plus loin. Les volets 6, 7, 8, 2a et les feuilles Q constituent des supports adaptés à recevoir des papillons prélevés dans la collection 16 à 25 après tri selon des critères propres à l'utilisateur et qui pourront être indiqués dans les cases 30, 31. Les supports 6 à 8, 2a, Q présentent des tracés qui définissent des emplacements tels que 27a-27j et 28a-28j adaptés à recevoir les papillons prelevés depuis la collection 16 à 20 en relation de chevauchement partiel laissant visible la zone d'identification I. Entre la colonne de cases 27a-27j et la colonne de cases 28a-28j, est prévue une colonne de cases 29a-29j de numérotation des zones d'identification/classement des papillons disposés de part et d'autre de ladite colonne. Ainsi, par exemple, on collera sur la case 27a un papillon P1 mentionnant une tâche à effectuer en première urgence, et sur la case 28a un papillon P2 mentionnant une tâche à effectuer en seconde urgence. Un papillon P3 mentionnant une tâche à effectuer en troisième urgence sera collé sur le papillon P1 à hauteur de la case 29b laissant visible la zone I dudit papillon P1. De la même façon, le papillon P4 indiquant une activité de quatrième urgence sera collé au niveau de la zone 29b sur le papillon P2 laissant visible la zone d'identification dudit papillon P2, et ainsi de suite.

Les feuilles Q du bloc 32 équipant la face lb du triptyque pourront permettre un tri et un stockage des activités du jour par transfert des papillons triés et stockés par secteurs d'activité, ou autres, sur les volets 6 à 8 et 2a. Ces feuilles Q pourront donc avoir une composition relativement similaire à celle des volets, à savoir deux colonnes de cases réceptrices de papillons transférables, la colonne de gauche étant par exemple réservée aux postes REUNIONS, PERSONNES A VOIR ou A QUI TELEPHONER et la colonne de droite aux opérations à exécuter. On pourra en outre prévoir à gauche une colonne 33 divisée en zones d'un quart d'heure pour noter les rendez-vous de la journée.

Enfin, la face 2b du volet 2 peut être imprimée d'un calendrier de l'année.

Le dispositif selon l'invention est utilisé comme suit :

Au fur et à mesure qu'apparaît la nécessité d'effectuer telle ou telle opération, cette opération est notée sur le papillon de surface du bloc approprié de la collection 16 à 20, le papillon en question est décollé de son bloc et stocké sur le volet approprié 6-8 ou 2a en le disposant dans l'ordre d'urgence à traiter voulu. Les papillons qui se trouvent d'ores et déjà sur ce volet peuvent éventuellement être reclassés en fonction de l'introduction du nouveau papillon. Les papillons ainsi triés et stockés sur les volets 6-8 et 2a sont ensuite, au fur et à mesure des échéances, transférés sur la feuille superficielle Q du bloc 32 d'opérations à effectuer dans la journée ou éventuellement sur les feuilles sous-jacentes si l'on veut préparer à l'avance les feuilles quotidiennes du lendemain ou du surlendemain. Il va de soi que l'on peut tout aussi bien préparer à l'avance une semaine, une quinzaine ou un mois complet, pour toutes activités ou tout au moins pour les activités prioritaires. Au fur et à mesure que les opérations de la journée sont effectuées, les papillons correspondants peuvent soit être détruits si l'affaire est close, soit être de nouveau stockés sur l'un des volets 6-8 ou 2a pour une reprise de l'affaire en temps utile, soit être classés sur une feuille support incluse dans les dossiers des affaires correspondantes. En fin de journée, la feuille d'activités journalière Q est enlevée, et apparaît au-dessous la feuille du lendemain. La feuille enlevée peut être photocopiée avant d'être débarrassée de ses papillons et la photocopie stockée comme trace complète de l'activité du jour. La feuille originale, dépourvue de papillons, mais gardant incrits les rendez-vous ou autres pourra être stockée de son côté.

Les papillons des blocs 9 à 15 sont utilisés pour les fonctions qui découlent des mentions dont ils sont imprimés et les papillons 22 à 25 peuvent avoir une utilisation quelconque.

Les papillons du bloc 21 servent, eux, à constituer un carnet d'adresses au moins provisoire sur un support approprié.

Il ressort de la description qui précède que l'invention apporte un outil d'organisation et/ou de planification qui, sous un faible volume, offre à l'utilisateur les collections de "fiches" dont il a besoin et permet des tris, stockages et sélections modifiables des différentes fiches. Il ressort également de la description que l'invention donne une nouvelle application aux blocs de papillons transférables qui, jusqu'ici, n'étaient utilisés que pour porter une information sur un document ou un objet sans avoir recours à des moyens extérieurs de solidarisation, tels qu'agrafes, trombones ou rubans adhésifs, tout en permettant une élimination immédiate et sans trace.

Il est bien entendu que la présente invention n'est pas limitée à la forme d'exécution décrite et représentée. En particulier, l'outil selon l'invention pourrait comporter un nombre différent de volets, les volets pourraient avoir une position relative différente formant cahier, classeur, bloc relié, etc..., les blocs de papillons pourraient être disposés d'une autre manière, un bloc de feuilles formant planning hebdomadaire pourrait être prévu en plus ou en remplacement de celui formant planning quotidien.

## Revendications

1. Outil d'organisation et/ou planification, comprenant, d'une part, au moins une série de fiches mobiles ayant une face inscriptible offrant une zone d'identification/classement (I) et une zone d'annotation (A) et, d'autre part, au moins un support (3) dont au moins une face (3a) est adaptée à recevoir temporairement lesdites fiches dans un ordre de classement déterminé et modifiable, ladite face du support (6-8, 2a, 3a) adaptée à recevoir temporairement lesdites fiches présentant des zones de réception (27a-27j ; 28a-28j) des fiches, avec un chevauchement partiel entre elles laissant à découvert leur zone d'identification/classement (I), caractérisé en ce que lesdites fiches sont constituées de papillons de papier (P), dits papillons "transférables", dont la face opposée à la face inscriptible est partiellement enduite d'un adhésif sensible à la pression permettant des collages, décollages et re-collages répétés, sur lesdites zones de réception (27a-27j ; 28a-28j) et en ce que ces zones de réception sont constituées de tracés délimitant des zones de réception (27a-27j ; 28a-28j) d'une géométrie appropriée à créer ledit chevauchement.

2. Outil selon la revendication 1, caractérisé en ce que les papillons transférables sont prélevés à partir d'au moins un bloc (16-25) de tels papillons (P) dont est garni l'outil lui-même.

3. Outil selon la revendication 2, caractérisé en ce qu'il est garni d'au moins une collection (16-25) de blocs différents de papillons transférables (P).

4. Outil selon la revendication 3, caractérisé en ce que la collection de blocs (16-25) occupe l'autre face (3b) dudit support.

5. Outil selon l'une quelconque des revendications 1 à 4, caractérisé en ce qu'il comporte au moins un autre support (2) articulé le long d'un bord (5) du précédent (3) en formant, selon le nombre de supports, un diptyque, un triptyque, etc...

6. Outil selon la revendication 5, caractérisé en ce qu'il comporte en outre au moins un autre support (6-8) réuni de façon pivotante à deux supports (1, 2) appartenant à un diptyque, triptyque, etc... au niveau de l'une des articulations (4) de ce dernier.

7. Outil selon la revendication 5 ou 6, caractérisé en ce que l'une au moins des faces dudit ou desdits autres supports (6-8, 2a, 3a) est adaptée à recevoir lesdits papillons transférables (P).

8. Outil selon l'une quelconque des revendications 3 à 7, caractérisé en ce que les blocs (9-25) diffèrent par la couleur et/ou le format et/ou le texte de mentions ou la géométrie de tracés constants portés sur lesdits papillons (P).

9. Outil selon l'une quelconque des revendications 5 à 8, caractérisé en ce que l'une au moins des faces dudit ou desdits autres supports forme planning quotidien (Q) et/ou planning hebdomadaire et/ou calendrier (2b).

10. Outil selon la revendication 9, caractérisé en ce que le planning quotidien (Q) et/ou le planning hebdomadaire est constitué d'une feuille formant support récepteur de papillons transférables (P), ladite feuille appartenant à un bloc (32) de telles feuilles arrachables.

11. Support pour outil d'organisation et/ou planification adapté à recevoir temporairement des fiches mobiles dans un ordre de classement déterminé et modifiable, lesdites fiches étant constituées par des papillons de papier (P) ayant une face inscriptible et une face partiellement enduite d'un adhésif sensible à la pression permettant des collages, décollages et re-collages répétés, et ledit support présentant des tracés délimitant des zones de réception pour les fiches caractérisé en ce que lesdits tracés ont une géométrie appropriée à créer un chevauchement entre les fiches reçues.

## Patentansprüche

1. Organisations- und/oder Planungswerkzeug, umfassend einerseits mindestens eine Reihe von beweglichen Zetteln mit einer beschreibbaren Seite, die eine Kennzeichnungs-/Ordnungszone (I) und eine Notizzone (A) aufweist, und andererseits mindestens einen Träger (3), von dem mindestens eine Seite (3a) zur zeitweisen Aufnahme der Zettel in einer bestimmten und veränderbaren Ordnung ausgebildet ist, wobei diese Seite des Trägers (6-8, 2a, 3a), ausgebildet zur zeitweisen Aufnahme der Zettel, Zonen (27a-27j; 28a-28j) zur Aufnahme der Zettel unter deren partiellen gegenseitigen Überlappung enthält, die ihre Kennzeichnungs-/Ordnungszone (I) freigelegt läßt, dadurch gekennzeichnet, daß die Zettel aus Klebezetteln (P) aus Papier, "übertragbare" Klebezettel genannt, bestehen, deren der beschreibbaren Seite entgegengesetzte Seite teilweise mit einem für Druck empfindlichen Klebstoff beschichtet ist, der wiederholte Verklebungen, Ablösungen und Wiederverklebungen auf den Aufnahmezonen (27a-27j; 28a-28j) gestattet, und daß diese Aufnahmezonen aus Vorzeichnungen bestehen, die die Aufnahmezonen (27a-27j; 28a-28j) mit einer zur Erzeugung dieser Überlappung geeigneten Geometrie abgrenzen.

2. Werkzeug nach Anspruch 1, dadurch gekennzeichnet, daß die übertragbaren Klebezettel mindestens einem Block (16-25) von solchen Klebeblättern (P) entnommen werden, mit dem das Werkzeug selbst bestückt ist.

3. Werkzeug nach Anspruch 2, dadurch gekennzeichnet, daß es mit mindestens einem Satz (16-25) von verschiedenen Blöcken von übertragbaren Klebezetteln (P) bestückt ist.

4. Werkzeug nach Anspruch 3, dadurch gekennzeichnet, daß der Satz von Blöcken (16-25) die andere Seite (3b) des Trägers einnimmt.

5. Werkzeug nach einem der Ansprüche 1 bis 4, dadurch gekennzeichnet, daß es mindestens einen anderen Träger (2) enthält, der längs eines Rands (5) des vorhergehenden (3) angelenkt ist, indem er, je nach der Anzahl von Trägern, ein Diptychon, ein Triptychon usw. bildet.

6. Werkzeug nach Anspruch 5, dadurch gekennzeichnet, daß es außerdem mindestens einen anderen Träger (6-8) enthält, der mit zwei Trägern (1, 2), die zu einem Diptychon, Triptychon usw. gehören, in Höhe eines dessen Gelenke (4) verschwenkbar verbunden ist.

7. Werkzeug nach Anspruch 5 oder 6, dadurch gekennzeichnet, daß mindestens eine der Seiten des oder der anderen Träger (6-8, 2a, 3a) für die Aufnahme der übertragbaren Klebezettel (P) ausgebildet ist.

8. Werkzeug nach einem der Ansprüche 3 bis 7, dadurch gekennzeichnet, daß die Blöcke (9-25) sich durch die Farbe und/oder das Format und/oder den Text von Vermerken oder die Geometrie von konstanten Vorzeichnungen, die auf diesen Klebezetteln (P) vorgesehen sind, unterscheiden.

9. Werkzeug nach einem der Ansprüche 5 bis 8, dadurch gekennzeichnet, daß mindestens eine der Seiten des oder der anderen Träger einen Tagesplan (Q) und/oder Wochenplan und/oder Kalender (2b) bildet.

10. Werkzeug nach Anspruch 9, dadurch gekennzeichnet, daß der Tagesplan (Q) und/oder der Wochenplan aus einem Blatt besteht, das einen Träger zur Aufnahme von übertragbaren Klebezetteln (P) bildet und zu einem Block (32) von solchen abreißbaren Blättern gehört.

11. Träger für ein Planungs- und/oder Organisationswerkzeug, das zur zeitweisen Aufnahme von beweglichen Zetteln in einer bestimmten und veränderbaren Ordnung ausgebildet ist, wobei diese Zettel aus Klebezetteln (P) aus Papier bestehen, die eine beschreibbare Seite und eine Seite besitzen, die teilweise mit einem für Druck empfindlichen Klebstoff beschichtet ist, der wiederholte Verklebungen, Ablösungen und Wiederverklebungen gestattet, wobei der Träger Vorzeichnungen besitzt, die Aufnahmezonen für die Zettel abgrenzen, dadurch gekennzeichnet, daß diese Vorzeichnungen eine Geometrie haben, die für die Erzeugung einer gegenseitigen Überlappung der aufgenommenen Zettel geeignet ist.

## Claims

1. Tool for organization and/or planning, comprising, on the one hand, at least one series of movable slips having one face which can be written on presenting an identification/classification zone (I) and an annotation zone (A) and, on the other hand, at least one support (3), at least one face (3a) of which is adapted in order temporarily to receive the said slips in a determined and changeable order of classification, the said face of the support (6-8, 2a, 3a) being adapted in order temporarily to receive the said slips having zones (27a-27j ; 28a-28j) for receiving the slips, with partial overlap between them leaving uncovered their identification/classification zone (I), characterized in that the said slips consist of paper tickets (P), called "transferable" tickets, of which the face opposite the face which can be written on is partially coated with a pressure-sensitive adhesive allowing repeated sticking, unsticking and resticking, on the said reception zones (27a-27j ; 28a-28j) and in that these reception zones consist of lines delimiting reception zones (27a-27j ; 28a-28j) with a geometry suitable for creating the said overlap.

2. Tool according to claim 1, characterized in that the transferable tickets are taken from at least one pad (16-25) of such tickets (P) with which the tool itself is provided.

3. Tool according to claim 2, characterized in that it is provided with at least one collection (16-25) of different pads of transferable tickets (P).

4. Tool according to claim 3, characterized in that the collection of pads (16-25) occupies the other face (3b) of the said support.

5. Tool according to any one of claims 1 to 4, characterized in that it includes at least one other support (2) hinged along one edge (5) of the preceding support (3) forming, according to the number of supports, a diptych, a triptych, etc.

6. Tool according to claim 5, characterized in that it furthermore includes at least one other support (6-8) joined pivotally to two supports (1, 2) belonging to a diptych, triptych, etc. at one of the hinges (4) of the latter.

7. Tool according to claim 5 or 6, characterized in that at least one of the faces of the said other support or supports (6-8, 2a, 3a) is adapted to receive the said transferable tickets (P).

8. Tool according to any one of claims 3 to 7, characterized in that the pads (9-25) differ in colour and/or format and/or comment text or the geometry of constant patterns which are drawn on the said tickets (P).

9. Tool according to any one of claims 5 to 8, characterized in that at least one of the faces of the said other support or supports forms a daily schedule (Q) and/or weekly schedule and/or calendar (2b).

10. Tool according to claim 9, characterized in that the daily schedule (Q) and/or the weekly schedule consists of one sheet forming a support receiving transferable tickets (P), the said sheet belonging to a pad (32) of such tear-off sheets.

11. Support for an organization and/or planning tool adapted in order temporarily to receive movable slips in a determined and changeable order of classification, the said slips consisting of paper tickets (P) having one face which can be written on and one face which is partially coated with a pressure-sensitive adhesive allowing repeated sticking, unsticking and resticking, and the said support presenting lines which delimit reception zones for said slips, characterized in that said lines have a geometry suitable for creating an overlap between the received slips.
